(19) Europäisches Patentamt
European Patent Office
Office européen des brevets

(11) **EP 3 826 090 B1**

(12) **EUROPEAN PATENT SPECIFICATION**

(45) Date of publication and mention
of the grant of the patent:
**21.02.2024  Bulletin 2024/08**

(21) Application number: **19837103.1**

(22) Date of filing: **18.07.2019**

(51) International Patent Classification (IPC):
**G01B 15/00** *(2006.01)*      **H01M 10/42** *(2006.01)*
**H01M 10/0585** *(2010.01)*

(52) Cooperative Patent Classification (CPC):
**G01B 15/00; H01M 10/04; H01M 10/0585;**
Y02E 60/10; Y02P 70/50

(86) International application number:
**PCT/KR2019/008902**

(87) International publication number:
**WO 2020/017907 (23.01.2020 Gazette 2020/04)**

(54) **SYSTEM AND METHOD FOR DETECTING MISALIGNMENT OF ELECTRODES**

SYSTEM UND VERFAHREN ZUR DETEKTION EINER FEHLAUSRICHTUNG VON ELEKTRODEN

SYSTÈME ET PROCÉDÉ DE DÉTECTION DE DÉFAUT D'ALIGNEMENT D'ÉLECTRODES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **18.07.2018   KR 20180083635**

(43) Date of publication of application:
**26.05.2021   Bulletin 2021/21**

(73) Proprietor: **Samsung SDI Co., Ltd.**
**Yongin-si, Gyeonggi-do 17084 (KR)**

(72) Inventors:
• **LEE, Hyosung**
**Yongin-si, Gyeonggi-do 17084 (KR)**

• **PARK, Jinsub**
**Yongin-si, Gyeonggi-do 17084 (KR)**
• **LEE, Young-Jun**
**Yongin-si, Gyeonggi-do 17084 (KR)**

(74) Representative: **Marks & Clerk LLP**
**15 Fetter Lane**
**London EC4A 1BW (GB)**

(56) References cited:
JP-A- 2016 109 654      KR-A- 20180 075 181
KR-B1- 101 121 259      KR-B1- 101 334 121
KR-B1- 101 705 330

## Description

**[Technical Field]**

The present invention relates to an inspection method of a rechargeable battery, and more particularly, to provide a system and method capable of easily detecting an alignment state of electrodes of a rechargeable battery having a stacked electrode assembly.

**[Background Art]**

A rechargeable battery may be repeatedly charged and discharged, unlike a primary battery. A low-capacity rechargeable battery is used for small portable electronic devices such as a mobile phone, a notebook computer, and a camcorder, and a large-capacity rechargeable battery is used as a power supply for driving a motor such as for a hybrid vehicle.

Such a rechargeable battery includes an electrode assembly having a structure in which a positive electrode, a separator, and a negative electrode are alternately stacked, a case for accommodating the electrode assembly therein, a cap plate for sealing an opening of the case, and an electrode terminal disposed on the cap plate to be electrically connected to the electrode assembly.

The electrode assembly may have a jelly roll structure formed by being spiral-wound in a state in which a positive electrode, a separator, and a negative electrode are stacked, or may have a stacked structure in which a positive electrode, a separator, and a negative electrode are individually repeatedly stacked.

Among them, the structure of the stacked electrode assembly is formed by repeatedly stacking the positive electrode, the separator, and the negative electrode, which are formed separately, and affects the safety of the secondary battery depending on an alignment state with each other.

Accordingly, it is necessary to inspect their alignment during a manufacturing process, but it is not easy to visually grasp a stacked state of the positive electrode and the negative electrode in the form of a thin plate, and accuracy is poor.

KR 2011-0017947 A discloses a system for detecting the misalignment of positive and negative electrodes of a stacked electrode assembly forming a rechargeable battery based on an X-ray imaging of two corners of said assembly at two distinct angles.

**[Disclosure]**

[Technical Problem]

An aspect of the present invention is to provide a system according to claim 1 and a method according to claim 5 for detecting misalignment of electrodes that can easily grasp an alignment state of electrodes of a stacked electrode assembly.

[Technical Solution]

An exemplary embodiment of the present invention provides a misalignment detecting system including: a reference jig on which an electrode assembly is disposed; a beam generator configured to irradiate X-rays at a first angle and a second angle with respect to any one corner of the electrode assembly and the reference jig; and a calculator configured to calculate position coordinates of a corner of the electrode assembly at the corner of the reference jig.

The reference jig may have a step portion that is spaced from the corner of the reference jig by a predetermined distance and protrudes to an upper portion of the reference jig.

The calculator may compensate coordinates calculated by comparing position coordinates of a corner of the step portion at the corner of the reference jig with an actual measured position value.

The electrode assembly may be a stacked electrode assembly.

An exemplary embodiment of the present invention provides a method of detecting misalignment of electrodes of an electrode assembly, including: disposing the electrode assembly on the reference jig; obtaining first coordinates of vertices of each of positive and negative electrodes positioned at first corners of the reference jig and the electrode assembly; calculating a first distance between a vertex of each negative electrode and a vertex of each positive electrode in the electrode assembly disposed at the first coordinates; and determining misalignment of the positive electrode and the negative electrode by comparing the first distance and a reference distance.

The obtaining of the first coordinates includes: performing first imaging of the first corners at a first angle; and performing second X-ray imaging of the first corners at a second angle, and the first coordinates may be obtained from a first X-ray image and a second X-ray image.

The method may further include compensating a distance value and coordinates measured by obtaining a measured distance for a distance between a vertex of the reference jig positioned at the first coordinates and a vertex of a step portion of the reference jig and an actual angle irradiated from an actually measured distance during actual imaging.

The method may further include obtaining second coordinates of vertices positioned at second corners of the reference jig and the electrode assembly, and the obtaining the second coordinates may include: performing third X-ray imaging of the second corners at the first angle; and performing fourth X-ray imaging of the second corners at the second angle.

The method may further include compensating a distance value and coordinates measured by obtaining a measured distance for a distance between a vertex of the reference jig positioned at the second coordinates and a vertex of a step portion of the reference jig and an actual angle irradiated from an actually measured distance during actual imaging.

[Advantageous Effects]

When the misalignment detecting system according to the exemplary embodiment of the present invention is used, coordinates of corner vertices of the positive electrode and the negative electrode may be easily obtained. Accordingly, a relative distance between the positive electrode and the negative electrode may be obtained from the coordinates, thereby easily detecting misalignment therebetween.

[Description of the Drawings]

FIG. 1 illustrates schematic diagram showing an X-ray imaging device according to an exemplary embodiment of the present invention.

FIG. 2 illustrates a schematic a top plan view for describing X-ray imaging.

FIG. 3 illustrates a schematically exploded perspective view of an electrode assembly according to an exemplary embodiment of the present invention.

FIG. 4 illustrates a method of checking alignment of electrodes according to an exemplary embodiment of the present invention.

FIG. 5 to FIG. 7 illustrate views for describing a coordinate obtaining method according to an exemplary embodiment of the present invention.

FIG. 8 illustrates a top plan view showing a reference jig and an electrode assembly according to an exemplary embodiment of the present invention.

FIG. 9 illustrates a schematic cross-sectional view of the reference jig and the electrode assembly of FIG. 8 imaged at a first angle and a second angle.

FIG. 10 and FIG. 11 illustrate views for describing a method of obtaining a distance between vertices according to an exemplary embodiment of the present invention.

[Mode for Invention]

The present invention will be described more fully hereinafter with reference to the accompanying drawings, in which exemplary embodiments of the invention are shown. As those skilled in the art would realize, the described embodiments may be modified in various different ways, all without departing from the scope of the present invention.

To clearly describe the present invention, parts that are irrelevant to the description are omitted, and like numerals refer to like or similar constituent elements throughout the specification.

Further, since sizes and thicknesses of constituent members shown in the accompanying drawings are arbitrarily given for better understanding and ease of description, the present invention is not limited to the illustrated sizes and thicknesses.

Throughout this specification and the claims that follow, when it is described that an element is "coupled/connected" to another element, the element may be "directly coupled/connected" to the other element or "indirectly coupled/connected" to the other element through a third element. In addition, unless explicitly described to the contrary, the word "comprise" and variations such as "comprises" or "comprising" will be understood to imply the inclusion of stated elements but not the exclusion of any other elements.

In the drawings, the thicknesses of layers, films, panels, regions, etc., are exaggerated for clarity. In the drawings, for better understanding and ease of description, the thicknesses of some layers and areas are exaggerated. It will be understood that when an element such as a layer, film, region, or substrate is referred to as being "on" another element, it can be directly on the other element or intervening elements may also be present. Further, in the specification, the word "on" or "above" means positioned on or below the object portion, and does not necessarily mean positioned on the upper side of the object portion based on a gravitational direction.

Hereinafter, a rechargeable battery according to an exemplary embodiment of the present invention will be described in detail accompanying drawings.

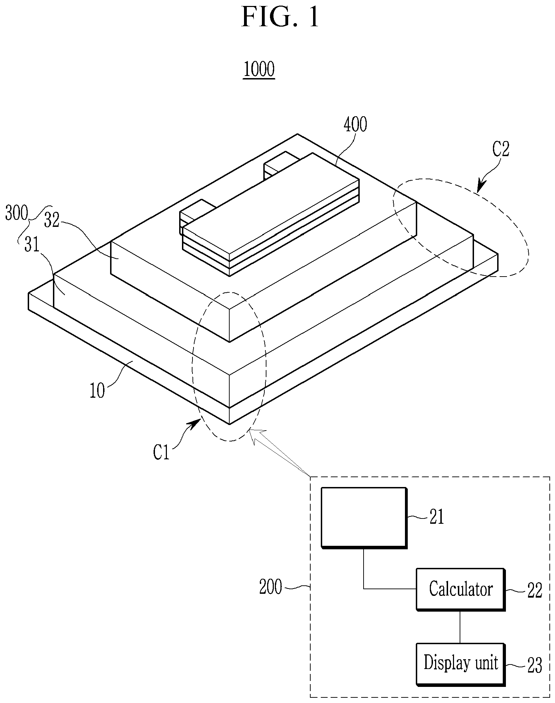

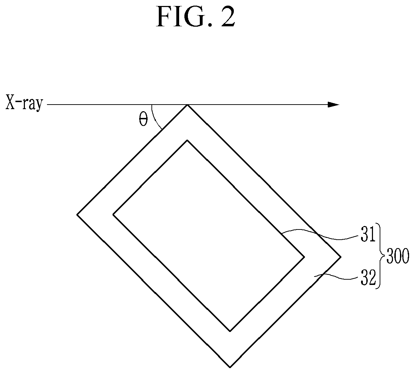

FIG. 1 illustrates schematic diagram showing an X-ray imaging device according to an exemplary embodiment of the present invention, and FIG. 2 illustrates a schematic a top plan view for describing X-ray imaging.

As illustrated in FIG. 1, the X-ray imaging device 1000 according to the exemplary embodiment of the present invention includes: a pedestal 10 on which an object is disposed; an imaging unit 200 for imaging an object; and a reference jig 300 positioned on the pedestal 10.

The imaging unit 200 includes a beam generator 21 for irradiating X-rays, a calculator 22 for storing and analyzing an image, and a display unit 23 for displaying the image or data.

The calculator 22 may calculate angles, distances, and coordinates from a target object to be imaged such as a reference jig or an electrode assembly from the image.

The reference jig 300 is for checking an irradiation angle of X-rays such that the X-rays can be incident on the target object at a predetermined angle.

The reference jig 300 has a thickness, and a stepped portion 32 may be formed at an upper portion of a base portion 31 of the reference jig 300 (however, hereinafter, the base portion is not separately distinguished, and is referred to as the reference jig). Hereinafter, a point where two sides of the reference jig 300 meet or a point where two sides of the step portion 32 meet is referred to as a vertex.

As illustrated in FIG. 2, the X-rays may be irradiated at a predetermined angle $\theta$, e.g., the first angle and the second angle, to a first corner C1 and a second corner C2 of the reference jig, and in this case, the first angle may be 30 degrees and the second angle may be 45 degrees.

Hereinafter, a method of checking alignment of an electrode plate for a rechargeable battery using an alignment checking device of FIG. 1 and FIG. 2 will be described with reference to the drawings.

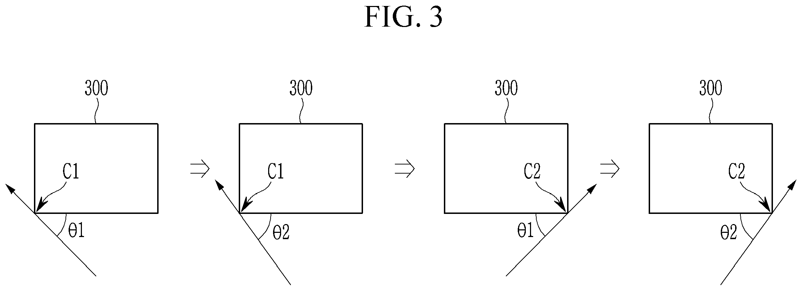

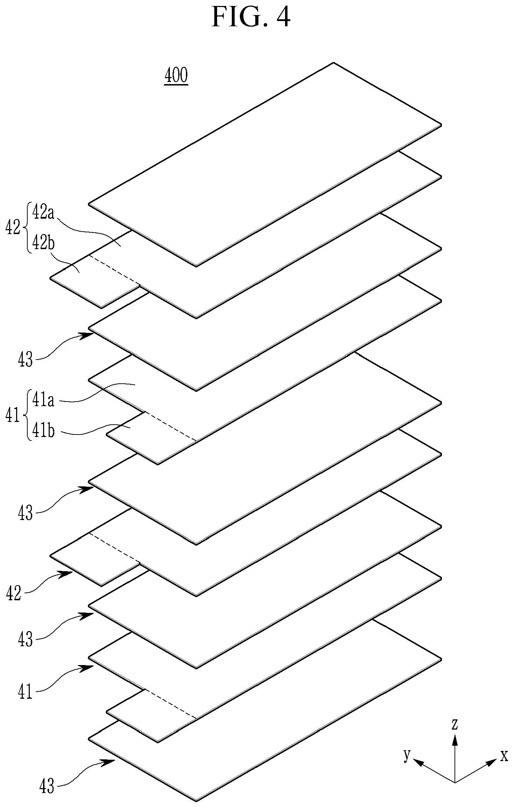

FIG. 3 illustrates a schematically exploded perspective view of an electrode assembly according to an exemplary embodiment of the present invention, and FIG. 4 illustrates a method of checking alignment of electrodes according to an exemplary embodiment of the present invention.

First, as illustrated in FIG. 1, an electrode assembly 400 to be checked for alignment is disposed in the x-ray imaging device 1000. In this case, the electrode assembly 400 may be disposed within a boundary line of the stepped portion 32.

Referring to FIG. 4, the electrode assembly according to the exemplary embodiment of the present invention is a stacked type made by repeatedly stacking a negative electrode 41 and a positive electrode 42 with a separator 43 disposed therebetween. The separator 43 may be a polymer film that allows lithium ions to pass therethrough.

The negative electrode 41 includes an active layer 41a formed by coating an active material on a current collector of a thin metal plate, and an uncoated region 41b where the thin metal plate is exposed by coating no active material thereon. A thin metal plate of the negative electrode 41 may be a thin copper (Cu) plate.

The positive electrode 42 includes an active layer 42a formed by coating an active material on a current collector of a thin metal plate, and an uncoated region 42b where the thin metal plate is exposed by coating no active material thereon. A thin metal plate of the positive electrode 42 may be a thin aluminum (Al) plate.

A plurality of uncoated regions 41b and 42b with a same polarity may be electrically connected to each other to be electrically connected to an outer terminal. The uncoated regions 41b and 42 may protrude in a same direction (see FIG. 1 and FIG. 4), but the present invention is not limited thereto, and may protrude in opposite directions.

The electrode assembly 400 may be sealed in a pouch-type case (not illustrated), and may protrude out of the pouch through the uncoated regions 41b and 42b or a connection member (not illustrated) connected to the uncoated regions 41b and 42b to be connected to external terminals.

Hereinafter, one negative electrode 41 and one positive electrode 42 included in the electrode assembly are illustrated as the electrode assembly for convenience of description.

Referring to FIG. 3, with respect to the first corner C1 of the reference jig 300, first X-ray imaging is performed at a first angle $\theta1$, and second X-ray imaging is performed at a second angle $\theta2$.

In this case, the first angle $\theta1$ may be 45 degrees, and the second angle $\theta2$ may be 30 degrees.

Next, with respect to the second corner C2 of the reference jig, third X-ray imaging is performed at the first angle $\theta1$, and fourth X-ray imaging is performed at the second angle $\theta2$.

Then, misalignment of the electrode assembly is determined from an image.

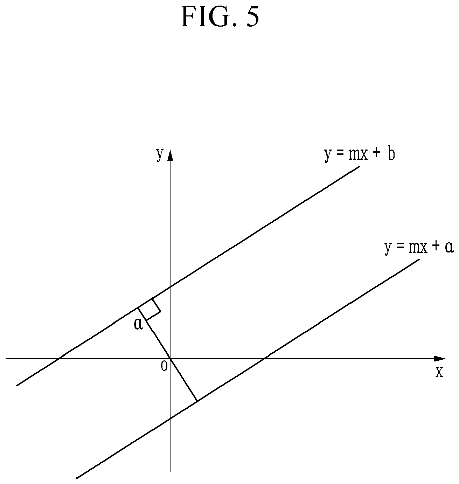

FIG. 5 to FIG. 7 illustrate views for describing a coordinate obtaining method according to an exemplary embodiment of the present invention.

The misalignment may be determined through X and Y coordinates obtained from the following equations, this calculation may be performed through the calculator of the imaging unit, and the image and the calculated result may be checked through the display unit.

Hereinafter, a method of obtaining the X and Y coordinates of two corners of the positive electrode and the negative electrode (hereinafter, referred to as a first corner and a second corner) will be described. In this case, vertices of the first corner C1 and the second corner C2 may be positioned on a same side.

First, as illustrated in FIG. 5, a distance d between two parallel straight lines may be obtained by [Equation 1].

$$[\text{Equation 1}]$$

$$d = \frac{|b-a|}{\sqrt{m^2+1}}$$

Accordingly, a minimum distance between two parallel straight lines passing through two vertices seen by X-ray imaging may be expressed as the distance d as shown in [Equation 1] and FIG. 5.

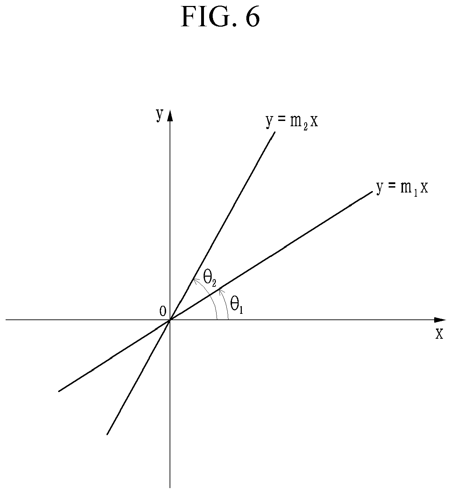

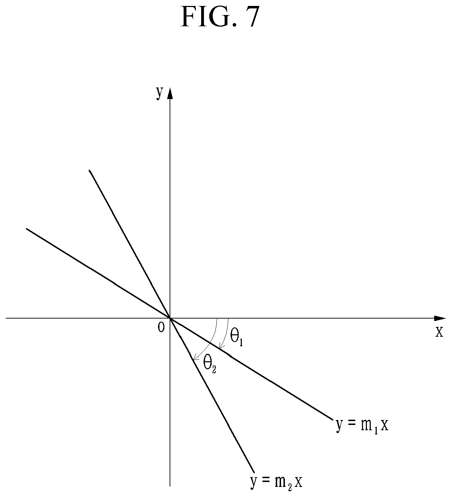

In this case, positions of the first vertices positioned at the first corner imaged by X-rays at the first angle θ1 and the second angle θ2 according to the present invention may be represented by straight lines having gradients $m_1$ and $m_2$, respectively, as shown in FIG. 6. Then, since vertices of the first corner and the second corner are positioned at opposite sides with respect to one side of the electrode, straight lines with respect to the first angle θ1 and the second angle θ2 of the second corner may have opposite gradients as illustrated in FIG. 7.

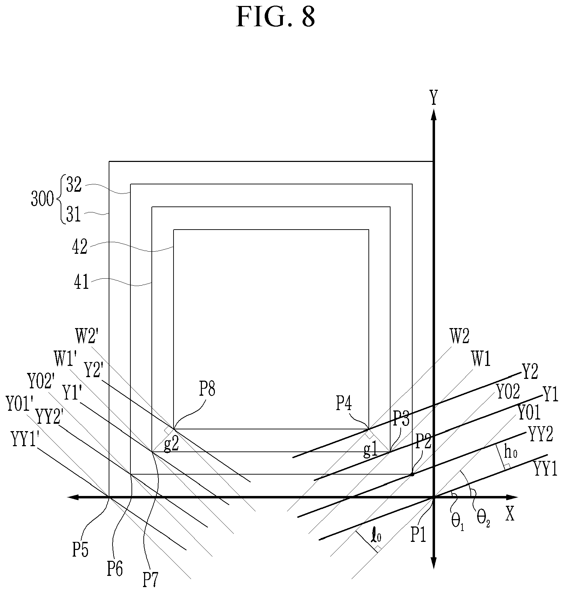

Accordingly, coordinates of a first vertex P1 of the reference jig 300 at the first corner and a second vertex P2 of the step 32 may be obtained from a straight line illustrated in FIG. 8.

This will be described in more detail below.

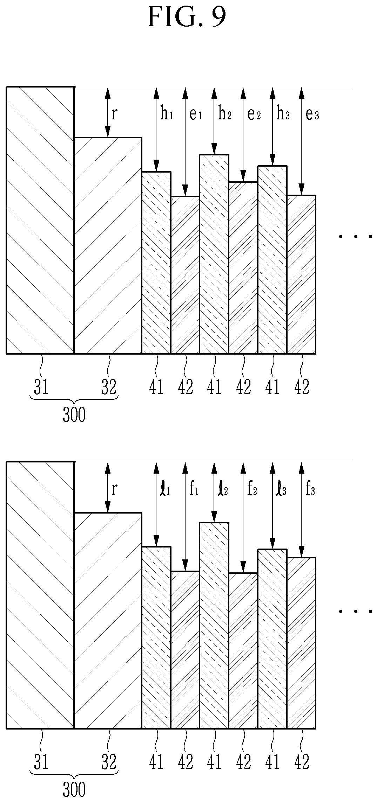

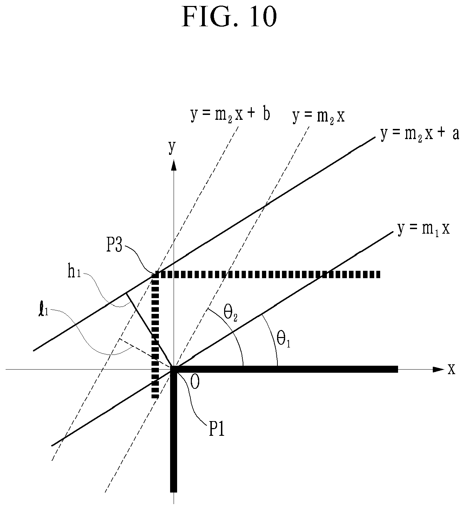

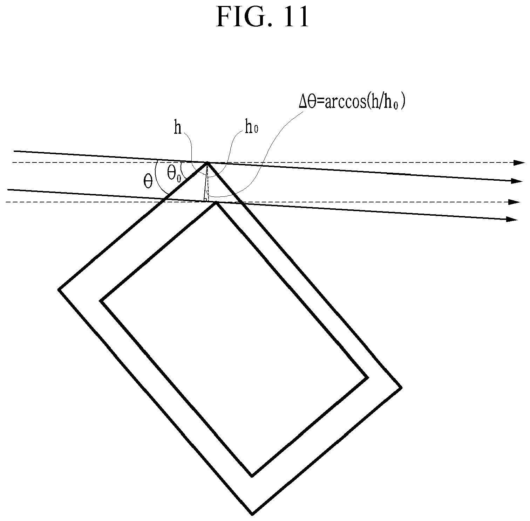

FIG. 8 illustrates a top plan view showing a reference jig and an electrode assembly according to an exemplary embodiment of the present invention, FIG. 9 illustrates a schematic cross-sectional view of the reference jig and the electrode assembly of FIG. 8 imaged at a first angle and a second angle, and FIG. 10 and FIG. 11 illustrate views for describing a method of obtaining a distance between vertices according to an exemplary embodiment of the present invention.

As illustrated in FIG. 8 and FIG. 9, at the first corner, a vertex of the reference jig 300 is referred to as a first vertex P1, a vertex of the step portion 32 is referred to as a second vertex P2, a vertex of the negative electrode 41 is referred to as a third vertex P3, and a vertex of the positive electrode 42 is referred to as a fourth vertex P4. Then, at the second corner, a vertex of the reference jig 300 is referred to as a fifth vertex P5, a vertex of the step portion 32 is referred to as a sixth vertex P6, a vertex of the negative electrode 41 is referred to as a seventh vertex P7, and a vertex of the positive electrode 42 is referred to as an eighth vertex P8.

First, coordinates of the first vertex P1 of the reference jig 300 positioned at the first corner and the second vertex P2 of the step portion 32 may be obtained by using a first straight line YY1 and a second straight line YY2 in which the gradient $m_1$ is parallel at the first angle θ1 and a third straight line YO1 and a fourth straight line YO2 in which the gradient $m_2$ is parallel at the second angle θ2.

Hereinafter, at the first angle θ1, straight lines passing through the vertices of the negative electrode and the positive electrode are referred to as Y1, Y2, ... (the negative electrode and the positive electrode are alternately 1, 2, 3, 4, ..., and this is true in the following), and at the second angle θ2, straight lines passing through the vertices of the negative electrode and the positive electrode are referred to as W1, W2, .... At the second corner, at the first angle θ1, straight lines passing through the vertices of the negative electrode and the positive electrode are referred to as Y1', Y2', ..., and at the second angle θ2, straight lines passing through the vertices of the negative electrode and the positive electrode are referred to as W1', W2', ....

In this case, a distance between the first vertex P1 and the third vertex P3 illustrated in FIG. 8 and FIG. 9 is referred to as $h_i$ at the first angle θ1 and $\ell_i$ at the second angle θ2 (i = 1, 2, 3, ...., and this is true in the following). A distance between the first vertex P1 and the fourth vertex P4 is referred to as $e_i$ at the first angle θ1 and $f_i$ at the second angle θ2. Distances between the reference first vertex P1 and the second vertex P2 are referred to as r1 and r2 at the first angle θ1 and the second angle θ2, respectively.

A distance between two parallel straight lines shown in FIG. 8 may be obtained from [Equation 1]. For example, a method of finding a distance between the first vertex P1 and the third vertex P3 will be described. Since it can be seen that a value of |b-a| in the above [Equation 1] are a and b at the gradients $m_1$ and $m_2$, respectively, and referring to FIG. 8 and FIG. 10, the first straight line YY1, the second straight line Y1, the third straight line YO1, and the fourth straight line W1 are respectively $y=m_1x$, $y=m_1x+a_i$, $y=m_2x$, and $y=m_2x+b_i$. Accordingly, as follows, $a_i$ of the first straight line YY1 and the second straight line Y1 is obtained, and $b_i$ of the third straight line YO1 and the fourth straight line W1 is obtained.

$m_1$ and $m_2$ may be respectively obtained by using tan (θ1) and tan (θ2).

$$|h_i| = \frac{|a_i|}{\sqrt{m_1{}^2+1}}$$

$$a_i = \pm|h_i|\sqrt{m_1{}^2+1}$$

$$a_i = |h_i|\sqrt{m_1{}^2+1} \quad (\text{for } h>0) \ (i=1,2,...,n)$$

$$a_i = -|h_i|\sqrt{m_1{}^2+1} \quad (\text{for } h<0)$$

$$b_i = |l_i|\sqrt{m_2{}^2+1} \quad (\text{for } l>0) \ (i=1,2,...,n)$$

$$b_i = -|l_i|\sqrt{m_2{}^2+1} \quad (\text{for } l<0)$$

Thereafter, when these equations are summarized for x and y, an intersection of the following two straight lines becomes the coordinates of the vertices.

$$y = m_1 x + a = m_1 \pm |h_i|\sqrt{m_1{}^2+1}$$

$$y = m_2 x + b = m_2 \pm |l_i|\sqrt{m_2{}^2+1}$$

$$x = \frac{b-a}{m_1 - m_2}$$

$$y = \frac{m_1 b - m_2 a}{m_1 - m_2}$$

With a same method, at the first angle θ1 and the second angle θ2, the coordinates from the vertex P1 of the corner of the reference jig to P2, P3, and P4 and the coordinates from the vertex P5 to P6, P7, and P8 may be calculated, and distances h1, h2, h3... of the vertices P2, P3, P4, P6, P7, and P8 from the vertices P1 and P5 of the corners of the reference jig may be calculated using the calculated coordinates.

Meanwhile, the distance of the vertices calculated from the actual X-ray image may be different from the actually measured distance. As such, there may be various factors that may cause the calculated distance of the vertices to differ from the actually measured distance, but a main factor is that it is imaged at an angle other than a predetermined angle (hereinafter, referred to as an actual angle) when actual X-ray imaging is performed.

Even when a specific angle, e.g., 30 degrees, is set in X-ray imaging equipment and imaging is performed, an actual imaged angle may be different from the predetermined angle. Accordingly, it is necessary to verify the imaged angle of the X-ray imaging equipment through the reference jig 300.

Therefore, when the actual imaged angle is different from the predetermined angle, the coordinates of each vertex obtained based on the predetermined angle are also different. That is, in reference coordinates obtained according to a reference distance of the reference jig 300, the coordinates of the first vertex may be (0, 0) and the coordinates of the second vertex may be (10, 10), but the coordinates of the first vertex according to a first distance r1 obtained from the distance measured from the actually captured image may be (0, 0) and the coordinates of the second vertex may be (11, 12).

As such, when the predetermined angle and the imaged angle are different, an actual angle between an actual distance between the first vertex P1 and the second vertex P2 separated by a certain distance and a distance between the first vertex P1 and the second vertex P2 measured by X-ray imaging is obtained by using a trigonometric function as shown in FIG. 11. For example, the actual imaged angle obtained from the first distance measured from the actual image may be 32 degrees by performing the imaging by setting it to 30 degrees.

A distance G1 between the third vertex P3 and the fourth vertex P4 may be obtained through the coordinates of the third vertex P3 and the fourth vertex P4 obtained from the coordinates calculated by the above method, and thus a distance G2 between $7^{th}$ and $8^{th}$ vertices may be obtained through the coordinates of the $7^{th}$ and $8^{th}$ vertices P7 and P8. In this case, the distances G1 and G2 between the vertices are relative distances between the vertices.

Since the third vertex P3 and the seventh vertex P7 are the vertices of the negative electrode 41 and the fourth vertex P4 and the eighth vertex P8 are the vertices of the positive electrode 42, a relative position between the positive electrode and the negative electrode and a distance therebetween may be recognized through these coordinates.

Since the negative electrode 41 and the positive electrode 42 have a substantially rectangular shape, XY coordinates may be obtained for the two corners (C1, C2), and predetermined horizontal or vertical lengths of the positive electrode and the negative electrode may be added to recognize positions of the remaining two corners (C3, C4).

Meanwhile, in the stacked electrode assembly 400, misalignment is determined depending on relative stacking positions of the positive electrode and the negative electrode. Due to characteristics of the battery, the positive electrode should be formed smaller than the negative electrode, and a boundary line of the positive electrode should be stacked such that it does not protrude outside that of the negative electrode. When the boundary line (or vertex) of the positive electrode is positioned outside the boundary line of the negative electrode, the positive electrode and the negative electrode are misaligned, and it is determined as defective.

In an exemplary embodiment of the present invention, a shape in which the positive electrode and the negative electrode are stacked, i.e., a relative position between the positive electrode and the negative electrode which are adjacent to each other, may be easily recognized by finding the coordinates of the two corners of the positive electrode and the negative electrode.

Therefore, not only the positive electrode protruding outside the boundary line of the negative electrode and being misaligned may be determined, but also a degree of misalignment from the relative distance between the positive electrode and the negative electrode may be easily recognized.

For convenience of description, one positive electrode and one negative electrode have been described, but when the x-ray imaging device according to an exemplary embodiment of the present invention is used, coordinates of each vertex of all positive and negative electrodes included in the electrode assembly may be obtained by using only images imaged at different angles for each corner, to determine misalignment for each electrode.

In this way, when positions of all the positive and negative electrodes are recognized, a position of the layer on which the misaligned positive or negative electrode is stacked may be recognized. Accordingly, it is possible to manufacture an electrode assembly including positive and negative electrodes in which misalignment does not occur by modifying only a stacking process of an electrode in which misalignment occurs.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

**Claims**

1.   A misalignment detecting system comprising:

>   a reference jig (300) on which an electrode assembly (400) is disposed;
>   an imaging unit (200) for imaging the reference jig and the electrode assembly, comprising a beam generator (21) configured to irradiate X-rays at a first angle and a second angle with respect to any one corner of the electrode assembly and the reference jig, wherein the second angle is different from the first angle; and
>   a calculator (22) configured to calculate position coordinates of a corner of a positive electrode (42) and a negative electrode (41) of the electrode assembly at the corner (C1, C2) of the reference jig (C1, C2) based on the acquired images of the reference jig (300) and the electrode assembly (400) at the first and second angles with respect to said corner and to determine misalignment of the positive electrode (42) and the negative electrode (41) of the electrode assembly (400) based on the calculated position coordinates.

2.   The misalignment detecting system of claim 1, wherein

>   the reference jig (300) has

a step portion (32) that is spaced from the corner of the reference jig by a predetermined distance and protrudes to an upper portion of the reference jig.

3. The misalignment detecting system of claim 2, wherein
the calculator (22) compensates coordinates calculated by comparing position coordinates of a corner of the step portion (32) at the corner of the reference jig with an actual measured position value.

4. The misalignment detecting system of claim 1, wherein
the electrode assembly (400) is a stacked electrode assembly.

5. A method for detecting misalignment of an electrode assembly through the misalignment detecting system of any one of claim 1 to claim 4, comprising:

disposing the electrode assembly (400) on the reference jig (300);
obtaining first coordinates of vertices of each of positive (42) and negative (41) electrodes positioned at first corners of the reference jig (300) and the electrode assembly by performing first imaging of the first corners at a first angle and performing second X-ray imaging of the first corners at a second angle, wherein the first coordinates are obtained from a first X-ray image and a second X-ray image, and wherein the second angle is different from the first angle;
calculating a first distance between a vertex of each negative electrode and a vertex of each positive electrode in the electrode assembly disposed at the first coordinates; and
determining misalignment of the positive electrode and the negative electrode by comparing the first distance and a reference distance.

6. The misalignment detecting method of claim 5, further comprising
compensating a distance value and coordinates measured by obtaining a measured distance for a distance between a vertex of the reference jig (300) positioned at the first coordinates and a vertex of a step portion of the reference jig and an actual angle irradiated from an actually measured distance during actual imaging.

7. The misalignment detecting method of claim 6, further comprising

obtaining second coordinates of vertices positioned at second corners of the reference jig and the electrode assembly,
wherein the obtaining of the second coordinates includes:

performing third X-ray imaging of the second corners at the first angle; and
performing fourth X-ray imaging of the second corners at the second angle.

8. The misalignment detecting method of claim 7, further comprising
compensating a distance value and coordinates measured by obtaining a measured distance for a distance between a vertex of the reference jig (300) positioned at the second coordinates and a vertex of a step portion (32) of the reference jig and an actual angle irradiated from an actually measured distance during actual imaging.

**Patentansprüche**

1. System zur Detektion von Fehlausrichtungen, umfassend:

eine Referenzschablone (300), auf der eine Elektrodenanordnung (400) angeordnet ist,
eine Abbildungseinheit (200) zum Abbilden der Referenzschablone und der Elektrodenanordnung, die einen Strahlgenerator (21) umfasst, der so konfiguriert ist, dass er Röntgenstrahlen in einem ersten Winkel und einem zweiten Winkel in Bezug auf eine beliebige Ecke der Elektrodenanordnung und der Referenzschablone ausstrahlt, wobei sich der zweite Winkel von dem ersten Winkel unterscheidet; und
einen Rechner (22), der konfiguriert ist, um Positionskoordinaten einer Ecke einer positiven Elektrode (42) und einer negativen Elektrode (41) der Elektrodenanordnung an der Ecke (C1, C2) der Referenzschablone (C1, C2) auf der Grundlage der aufgenommenen Bilder der Referenzschablone (300) und der Elektrodenanordnung (400) in dem ersten und zweiten Winkel in Bezug auf die genannte Ecke zu berechnen und eine Fehlausrichtung der positiven Elektrode (42) und der negativen Elektrode (41) der Elektrodenanordnung (400) auf der Grundlage der berechneten Positionskoordinaten zu bestimmen.

**2.** System zur Detektion von Fehlausrichtungen nach Anspruch 1, wobei
die Referenzschablone (300) Folgendes aufweist:
einen Stufenabschnitt (32), der von der Ecke der Referenzschablone um einen vorbestimmten Abstand beabstandet ist und zu einem oberen Abschnitt der Referenzschablone hin vorsteht.

**3.** System zur Detektion von Fehlausrichtungen nach Anspruch 2, wobei
der Rechner (22) berechnete Koordinaten durch Vergleich von Positionskoordinaten einer Ecke des Stufenabschnitts (32) an der Ecke der Referenzschablone mit einem tatsächlich gemessenen Positionswert kompensiert.

**4.** System zur Detektion von Fehlausrichtungen nach Anspruch 1, wobei
die Elektrodenanordnung (400) eine gestapelte Elektrodenanordnung ist.

**5.** Verfahren zur Detektion einer Fehlausrichtung einer Elektrodenanordnung durch das System zur Detektion von Fehlausrichtungen nach einem der Ansprüche 1 bis 4, umfassend:

Anordnen der Elektrodenanordnung (400) auf der Referenzschablone (300);
Erhalten von ersten Koordinaten von Scheitelpunkten jeder der positiven (42) und der negativen (41) Elektrode, die an ersten Ecken der Referenzschablone (300) und der Elektrodenanordnung positioniert sind, indem eine erste Abbildung der ersten Ecken unter einem ersten Winkel und eine zweite Röntgenaufnahme der ersten Ecken unter einem zweiten Winkel durchgeführt wird, wobei die ersten Koordinaten aus einer ersten Röntgenaufnahme und einer zweiten Röntgenaufnahme erhalten werden, und wobei sich der zweite Winkel von dem ersten Winkel unterscheidet;
Berechnen eines ersten Abstands zwischen einem Scheitelpunkt jeder negativen Elektrode und einem Scheitelpunkt jeder positiven Elektrode in der an den ersten Koordinaten angeordneten Elektrodenanordnung, und Bestimmen einer Fehlausrichtung der positiven Elektrode und der negativen Elektrode durch Vergleichen des ersten Abstands und eines Referenzabstands.

**6.** Verfahren zur Detektion von Fehlausrichtungen nach Anspruch 5, ferner umfassend
das Kompensieren eines Abstandswerts und Koordinaten, die durch Erhalten eines gemessenen Abstands für einen Abstand zwischen einem Scheitelpunkt der Referenzschablone (300), die an den ersten Koordinaten positioniert ist, und einem Scheitelpunkt eines Stufenabschnitts der Referenzschablone und eines tatsächlichen Winkels, der aus einem tatsächlich gemessenen Abstand während der tatsächlichen Abbildung ausgestrahlt wird, gemessen werden.

**7.** Verfahren zur Detektion von Fehlausrichtungen nach Anspruch 6, ferner umfassend

das Erhalten zweiter Koordinaten von Scheitelpunkten, die an zweiten Ecken der Referenzschablone und der Elektrodenanordnung positioniert sind,
wobei das Erhalten der zweiten Koordinaten schließt ein:

Durchführen einer dritten Röntgenaufnahme der zweiten Ecken unter dem ersten Winkel; und
Durchführen einer vierten Röntgenaufnahme der zweiten Ecken unter dem zweiten Winkel.

**8.** Verfahren zur Detektion von Fehlausrichtungen nach Anspruch 7, ferner umfassend
das Kompensieren eines Abstandswerts und von Koordinaten, die durch Erhalten eines gemessenen Abstands für einen Abstand zwischen einem Scheitelpunkt der Referenzschablone (300), die an den zweiten Koordinaten positioniert ist, und einem Scheitelpunkt eines Stufenabschnitts (32) der Referenzschablone und eines tatsächlichen Winkels, der aus einem tatsächlich gemessenen Abstand während der tatsächlichen Abbildung ausgestrahlt wird, gemessen werden.

## Revendications

**1.** Système de détection de défaut d'alignement comprenant :

un gabarit de référence (300) sur lequel est disposé un ensemble d'électrodes (400) ;

une unité d'imagerie (200) permettant de réaliser une image du gabarit de référence et de l'ensemble d'électrodes, comprenant un générateur de faisceaux (21) configuré pour émettre des rayons X selon un premier angle et selon un deuxième angle par rapport à un quelconque coin de l'ensemble d'électrodes et du gabarit de référence, dans lequel le deuxième angle est différent du premier angle ; et

un calculateur (22) configuré pour calculer des coordonnées de position d'un coin d'une électrode positive (42) et d'une électrode négative (41) de l'ensemble d'électrodes au niveau du coin (C1, C2) du gabarit de référence (C1, C2) sur la base des images acquises du gabarit de référence (300) et de l'ensemble d'électrodes (400) au niveau des premier et deuxième angles par rapport audit coin et pour déterminer un défaut d'alignement de l'électrode positive (42) et de l'électrode négative (41) de l'ensemble d'électrodes (400) sur la base des coordonnées de position calculées.

**2.** Système de détection de défaut d'alignement selon la revendication 1, dans lequel
le gabarit de référence (300) présente :
une partie étagée (32) qui est espacée du coin du gabarit de référence d'une distance prédéterminée et fait saillie vers une partie supérieure du gabarit de référence.

**3.** Système de détection de défaut d'alignement selon la revendication 2, dans lequel
le calculateur (22) compense des coordonnées calculées en comparant des coordonnées de position d'un coin de la partie étagée (32) au niveau du coin du gabarit de référence avec une valeur de position mesurée réelle.

**4.** Système de détection de défaut d'alignement selon la revendication 1, dans lequel
l'ensemble d'électrodes (400) est un ensemble d'électrodes empilées.

**5.** Procédé permettant de détecter un défaut d'alignement d'un ensemble d'électrodes par le biais du système de détection de défaut d'alignement selon l'une quelconque des revendications 1 à 4, comprenant :

le fait de disposer l'ensemble d'électrodes (400) sur le gabarit de référence (300) ;
l'obtention de premières coordonnées de sommets de chacune des électrodes positive (42) et négative (41) positionnés au niveau de premiers coins du gabarit de référence (300) et de l'ensemble d'électrodes en effectuant une première imagerie des premiers coins selon un premier angle et en effectuant une deuxième imagerie par rayons X des premiers coins selon un deuxième angle, dans lequel les premières coordonnées sont obtenues à partir d'une première image radiographique et d'une deuxième image radiographique, et dans lequel le deuxième angle est différent du premier angle ;
le calcul d'une première distance entre un sommet de chaque électrode négative et un sommet de chaque électrode positive dans l'ensemble d'électrodes disposé au niveau des premières coordonnées ; et
la détermination d'un défaut d'alignement de l'électrode positive et de l'électrode négative en comparant la première distance et une distance de référence.

**6.** Procédé de détection de défaut d'alignement selon la revendication 5, comprenant en outre
la compensation d'une valeur de distance et de coordonnées mesurées en obtenant une distance mesurée pour une distance entre un sommet du gabarit de référence (300) positionné au niveau des premières coordonnées et un sommet d'une partie étagée du gabarit de référence et un angle réel irradié à partir d'une distance réellement mesurée pendant l'imagerie elle-même.

**7.** Procédé de détection de défaut d'alignement selon la revendication 6, comprenant en outre

l'obtention de deuxièmes coordonnées de sommets positionnés au niveau de deuxièmes coins du gabarit de référence et de l'ensemble d'électrodes,
dans lequel l'obtention des deuxièmes coordonnées inclut :

la réalisation d'une troisième imagerie par rayons X des deuxièmes coins selon le premier angle ; et
la réalisation d'une quatrième imagerie par rayons X des deuxièmes coins selon le deuxième angle.

**8.** Procédé de détection de défaut d'alignement selon la revendication 7, comprenant en outre
la compensation d'une valeur de distance et de coordonnées mesurées en obtenant une distance mesurée pour une distance entre un sommet du gabarit de référence (300), positionné au niveau des deuxièmes coordonnées, et un sommet d'une partie étagée (32) du gabarit de référence et un angle réel irradié à partir d'une distance réellement mesurée pendant l'imagerie elle-même.

# FIG. 1

1000

# FIG. 2

EP 3 826 090 B1

# FIG. 3

# FIG. 4

# FIG. 5

y = mx + b

y = mx + a

# FIG. 6

FIG. 7

# FIG. 8

# FIG. 9

# FIG. 10

# FIG. 11

$\Delta\theta = \arccos(h/h_0)$

**EP 3 826 090 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20110017947 A